# EUROPEAN PATENT SPECIFICATION

(11) **EP 4 212 803 B1**
(45) Date of publication and mention of the grant of the patent: **29.10.2025**
(21) Application number: 22213184.9
(22) Date of filing: 13.12.2022
(51) Int. Cl.: F25D 23/00, F25D 23/06

(54) **HEAT-INSULATED HOUSING OF A HOUSEHOLD REFRIGERATION APPLIANCE**
WÄRMEISOLIERTES GEHÄUSE EINES HAUSHALTSKÄLTEGERÄTES
BOÎTIER THERMIQUEMENT ISOLÉ D'UN APPAREIL DE RÉFRIGÉRATION DOMESTIQUE

(30) Priority: 14.01.2022 CN 202220090880 U
(43) Date of publication of application: 19.07.2023
(73) Proprietor: BSH Hausgeräte GmbH, 81739 München (DE)
(72) Inventor: Lu, Yueqiang, Nanjing, 210046 (CN); Ma, Jianfeng, Chuzhou, 239016 (CN); Yang, Zhenyu, Chuzhou, Anhui, 239016 (CN)

(56) References cited:
- DE-A1- 102017 214 245
- DE-A1- 102019 216 094
- JP-A- 2015 148 353
- JP-U- H01 172 695
- JP-U- S 555 078

## Description

### TECHNICAL FIELD

The present invention relates to the field of household appliances, and in particular, to a heat-insulated housing of a household refrigeration appliance and a corresponding household refrigeration appliance.

### BACKGROUND

Nowadays, with the improvement of people's living standards, household refrigeration appliances such as refrigerators and wine coolers have been used in many households. To ensure good cooling effects, the household refrigeration appliances usually include a heat-insulated housing. The housing may include a liner, a shell spaced apart from the liner, and a heat insulation layer filled between the liner and the shell. The shell may include a base plate, a top plate, a back plate, and a side plate that are interconnected and surround the liner from the outside.

During manufacturing of the housing, the base plate may be supported by a side plate support. Therefore, an edge of the base plate may be inserted into a U-shaped groove of the side plate support. Then, foaming filling may be performed to form the heat insulation layer of the housing. During foaming, the base plate may shift relative to the side plate support or even slide out of the side plate support, which may further lead to problems such as a leakage of heat insulation foam.

To prevent the base plate from shifting relative to the side plate support during assembly, an additional auxiliary tool is required to fix the base plate and the side plate support in advance. However, this may result in complex manufacturing of the housing and may not be conducive to implement automated manufacturing.

DE 10 2019 216094 A1 discloses a domestic refrigeration appliance device having at least one side wall component, at least one machine room cover wall and at least one sealing element, which seals at least one region between the side wall component and the machine room cover wall.

JP H01 172695 U discloses a housing of a refrigerator including two side walls elements and a wall element connected to both side wall elements.

JP 2015 148353 A discloses a refrigerator including an outer case side surface plate forming an outer case of a heat insulating box and a bottom plate forming a bottom surface of the outer case, wherein a lateral end part of the bottom plate is connected with the outer case side surface plate.

### SUMMARY

An objective of embodiments of the present invention is to provide an improved heat-insulated housing of a household refrigeration appliance and a corresponding household refrigeration appliance, so that the housing can be assembled conveniently and reliably.

The heat-insulated housing of a household refrigeration appliance according to the present invention is defined in claim 1.

The embodiments of the present invention provide a heat-insulated housing of a household refrigeration appliance, where the housing includes: a liner, bounding a storage compartment for storing an article; a base plate, located below the liner, where a space filled with a heat insulation material is formed between the base plate and the liner, and the base plate has two side edges opposite to each other; and at least one side plate support, supporting the base plate, where the side plate support is formed with at least one insertion groove, the insertion groove has two groove side walls opposite to each other, and a side edge section of the base plate adjacent to the side edges is inserted between the two groove side walls, where a stop structure is formed on at least one of the two groove side walls, a clamping structure is formed on the side edge section of the base plate, and the stop structure is adapted to contact the clamping structure and restrict movement of the side edge section relative to the insertion groove in a direction opposite to an insertion direction of the side edge section into the insertion groove. By the clamping structure and the stop structure, after being inserted into the insertion groove of the side plate support, the side edge section of the base plate is restricted in the insertion groove and cannot be disengaged from the insertion groove. Therefore, a relative position between the base plate and the side plate support can be maintained during assembly to prevent the base plate and the side plate support from detaching from each other, and no additional component or tool is required, which simplifies the assembly and is particularly conducive to implement production automation.

According to an optional embodiment of the present invention, the stop structure is adapted to shift or be displaced in a groove width direction of the insertion groove by means of the stop structure and/or elastic deformation of the groove side wall; and/or the clamping structure is adapted to shift or be displaced in a groove width direction of the insertion groove by means of the clamping structure and/or elastic deformation of the side edge section. This is conducive to implement locking between the clamping structure and the stop structure without an additional component or tool, thereby simplifying the assembly. This is further conducive to detach the base plate from the side plate support without damage, and no additional component or tool is required.

According to the present invention, the stop structure includes a hook protruding from the groove side wall and extending towards a direction of the side edge section. Such a stop structure is easy to manufacture and can advantageously provide resistance to blocking the clamping structure.

According to an optional embodiment of the present invention, the hook has an inclined outer surface at one side towards an opening of the insertion groove, and the inclined outer surface inclines away from the groove side wall on which the hook is located in the insertion direction of the side edge section. The inclined outer surface can make the insertion operation of the side edge section more convenient.

According to an optional embodiment of the present invention, the side plate support includes a support body, the groove side wall is formed on the support body protruding from the support body, and the hook is located at a free end of the groove side wall away from the support body. Therefore, shifting of the hook in the groove width direction can be implemented by means of elastic deformation of the groove side wall.

According to the present invention, the clamping structure includes a fin extending from the base plate to a direction of the groove side wall formed with the hook, and the hook is located at an outer side of the fin and restricts movement of the fin in the direction opposite to the insertion direction. Such a clamping structure is easy to manufacture. The fin is particularly adapted to be combined with the hook to implement the locking between the clamping structure and the stop structure only by means of an insertion action of the side edge section into the insertion groove, without an additional assembly action of an operator.

According to the present invention, the fin extends obliquely in the direction opposite to the insertion direction towards the groove side wall formed with the hook. Therefore, the fin can provide a significant resistance for preventing the side edge section from detaching from the insertion groove, and can make the side edge section be subjected to a smaller resistance when inserted into the insertion groove.

According to the present invention, the side edge section includes an edge body extending from a middle part of the base plate to the side edge and a laminate extending from the side edge to the middle part of the base plate in parallel to the edge body, and the fin is connected to one end of the laminate opposite to the side edge. Therefore, the insertion operation of the side edge section can be more convenient.

According to an optional embodiment of the present invention, a seal element extending along the side edge is arranged on the side edge section, and the seal element is at least partially located between the laminate and the groove side wall formed with the hook. Therefore, a leakage of the heat insulation material from a gap between the base plate and the side plate support towards a direction of a mechanical compartment can be prevented.

According to an optional embodiment of the present invention, the clamping structure includes a concave portion formed in the side edge section, and the hook extends into the concave portion and restricts movement of the concave portion in the direction opposite to the insertion direction . Such a clamping structure is easy to manufacture.

According to an optional embodiment of the present invention, the clamping structure includes a step formed in the side edge section, the step has a side surface of the step facing a direction of the opening of the insertion groove, and the hook is adapted to contact the side surface of the step and restrict movement of a concave portion in the direction opposite to the insertion direction. Such a clamping structure is easy to manufacture.

According to an optional embodiment of the present invention, the side plate support is a plastic piece, which makes the side plate support easy to manufacture and makes it easy to form the stop structure, such as the hook, for the base plate. In addition, shifting of the stop structure in the groove width direction can be implemented by means of elasticity of the plastic piece.

According to an optional embodiment of the present invention, the base plate is a metal piece, which makes the base plate have sufficient strength and easy to manufacture, and particularly makes it easy to form the clamping structure, especially the fin.

According to an optional embodiment of the present invention, the insertion groove is constructed into a U-shaped groove formed by the two groove side walls and a groove bottom connecting the two groove side walls, and the groove bottom is adapted to restrict the movement of the side edge section relative to the insertion groove in the insertion direction. Such an insertion groove structure is simple and is easy to manufacture.

According to an optional embodiment of the present invention, a plurality of insertion grooves are formed on the side plate support; and/or a plurality of stop structures are formed on the insertion groove, and the stop structures are spaced apart in an extension direction of the insertion groove, which makes the connection between the base plate and the side plate support more stable.

According to an optional embodiment of the present invention, the base plate and the side plate support are fixed to each other by means of the heat insulation material in the housing, and the base plate and the side plate support at least partially bound a mechanical compartment of the household refrigeration appliance. The mechanical compartment may be formed in a simple manner. For example, a refrigeration device of the household refrigeration appliance may be arranged in the mechanical compartment.

According to a second aspect of the present invention, the embodiments of the present invention provide a household refrigeration appliance, where the household refrigeration appliance includes the housing according to the foregoing embodiments.

### BRIEF DESCRIPTION OF THE DRAWINGS

Hereinafter, the principle, features and advantages of the present invention can be better understood by referring to the accompanying drawings to describe the present invention in more detail. The accompanying drawings include the following:
FIG. 1 schematically shows a three-dimensional view of a household refrigeration appliance according to an exemplary embodiment of the present invention;
FIG. 2 schematically shows an exploded view of a base plate and a side plate support of an existing refrigerator;
FIG. 3 schematically shows a sectional view of a component formed by a side plate support and a base plate of a heat-insulated housing according to an exemplary embodiment of the present invention;
FIG. 4 schematically shows an enlarged view of a part circled in FIG. 3;
FIG. 5 schematically shows a view similar to FIG. 4 according to another exemplary embodiment of the present invention;
FIG. 6 and FIG. 7 schematically show three-dimensional views of a side plate support and a base plate according to the embodiment shown in FIG. 5;
FIG. 8 schematically shows a partial view of a part of a housing including a clamping structure and a stop structure according to an exemplary embodiment of the present invention; and
FIG. 9 schematically shows a partial view of a part of a housing including a clamping structure and a stop structure according to an exemplary embodiment of the present invention.

### Reference numeral list

10 housing
11 liner
12 base plate
121 side edge
122 side edge section
123 clamping structure
123a fin
123b concave portion
123c step
124 edge body
125 laminate
126 seal element
13 side plate support
131 insertion groove
1311 groove side wall
1312 stop structure
1312a hook
1313 inclined outer surface
132 support body
20 storage compartment
30 door

### DETAILED DESCRIPTION

To make the technical problems to be resolved by the present invention, technical solutions, and beneficial technical effects more comprehensible, the following further describes the present invention in detail with reference to the accompanying drawings and a plurality of exemplary embodiments. It should be understood that the specific embodiments described herein are used merely for describing the present invention and are not intended to limit the protection scope of the present invention.

First, for ease of understanding, back to the description in the background, the household refrigeration appliance in the related art has problems that the base plate and the side plate support are easy to relatively shift or detach during manufacturing of the housing, and an additional auxiliary tool is required to fix the base plate and the side plate support in advance.

For at least one of the foregoing technical problems or another possible technical problem, an exemplary embodiment of the present invention provides a heat-insulated housing of a household refrigeration appliance, where the housing includes: a liner, bounding a storage compartment for storing an article; a base plate, located below the liner, where a space filled with a heat insulation material is formed between the base plate and the liner, and the base plate has two side edges opposite to each other; and at least one side plate support, supporting the base plate, where the side plate support is formed with at least one insertion groove, the insertion groove has two groove side walls opposite to each other, and a side edge section of the base plate adjacent to the side edges is inserted between the two groove side walls, where a stop structure is formed on at least one of the two groove side walls, a clamping structure is formed on the side edge section of the base plate, and the stop structure is adapted to contact the clamping structure and restrict movement of the side edge section relative to the insertion groove in a direction opposite to an insertion direction of the side edge section into the insertion groove.

To better understand the present invention, the following describes the exemplary embodiments of the present invention with reference to the accompanying drawings.

Before detailed descriptions, it should be noted that, position terms used in descriptions are with reference to conventional use states of the household refrigeration appliance, which is for ease of description, and cannot be understood as absolute limitations on corresponding features.

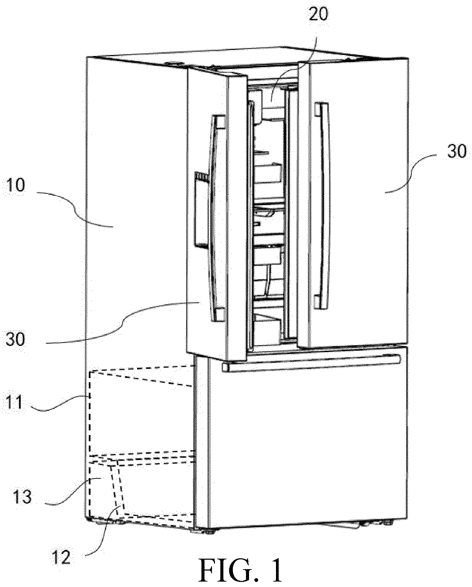

FIG. 1 schematically shows a three-dimensional view of a household refrigeration appliance according to an exemplary embodiment of the present invention. In this embodiment, the household refrigeration appliance is implemented as a refrigerator.

As can be seen from FIG. 1, the refrigerator includes a heat-insulated housing 10, a storage compartment 20 located in the housing 10, and a door 30 mounted on the housing 10. The door 30, for example, is pivotally connected to the housing 10, and can pivot around a pivot axis extending in a height direction to open or close the storage compartment 20. As shown in FIG. 1, the storage compartment 20 may include a refrigerating chamber and a freezing chamber located below the refrigerating chamber. Since the freezer in FIG. 1 is in an unopened state, the interior of the freezer is invisible. FIG. 1 exemplarily shows a refrigerator implemented as a combined refrigerator-freezer. A person skilled in the art will understand that the present invention is also applicable to a refrigerator of another type, such as a single refrigerator or freezer. In addition, according to requirements, the present invention may further be applied to another household refrigeration appliance other than the refrigerator, such as a wine cooler.

As can be seen from FIG. 1, the housing 10 may include a liner 11, a shell spaced apart from the liner 11, and a heat insulation layer (not shown herein) filled between the liner 11 and the shell. A freezing chamber of the housing 10 may be bounded by the liner 11. The shell may include a base plate 12, a top plate, a back plate, and a side plate that are interconnected and surround the liner 11 from the outside. Although only one liner 11 is schematically shown herein by a dashed line, the housing 10 may include a plurality of liners 11 surrounded by the shell, and the plurality of liners 11 are arranged, for example, up and down or side by side. The base plate 12 is arranged below the liner 11, and a space filled with a heat insulation material such as heat insulation foam is formed between the base plate 12 and the liner 11. The base plate 12 has two side edges 121 opposite to each other, and the base plate 12 extends between the two side edges 121. To support the base plate 12, the housing 10 further includes at least one side plate support 13. In a manufactured housing 10, the base plate 12 and the side plate support 13 may be fixed to each other by means of the heat insulation material in the housing 10, and the base plate 12 and the side plate support 13 at least partially bound a mechanical compartment. The mechanical compartment, for example, may be configured to accommodate a mechanical device, such as a compressor, a condenser, or a fan, of the household refrigeration appliance. The base plate 12 may be particularly formed to include a base plate front portion and a base plate rear portion elevated upward relative to the base plate front portion, so that the mechanical compartment of the refrigerator may be formed below the base plate rear portion.

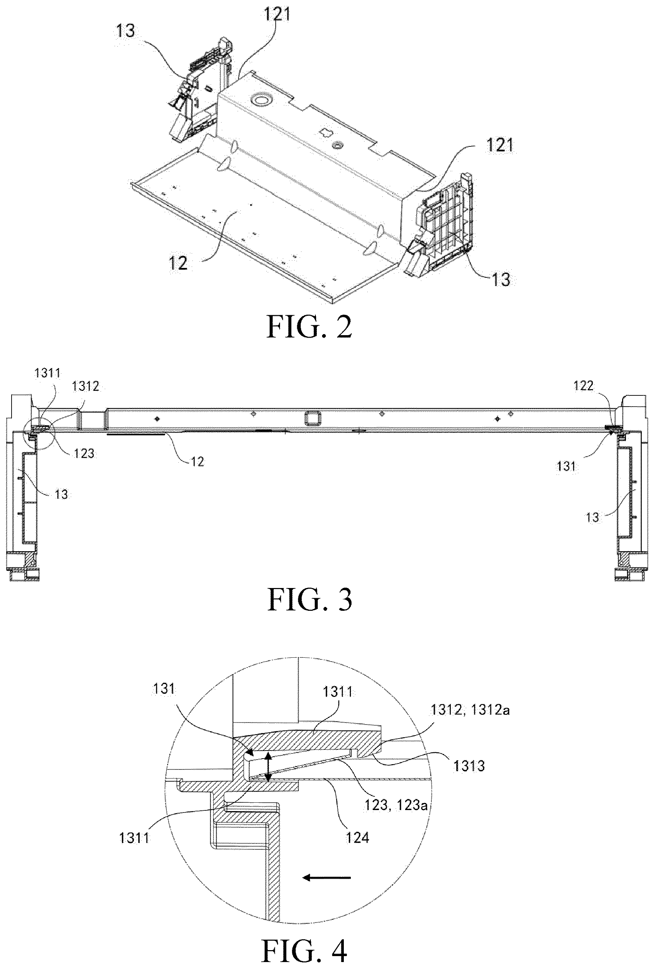

FIG. 2 schematically shows an exploded view of a base plate 12 and a side plate support 13 of an existing refrigerator. As can be seen from FIG. 2, the base plate 12 may be respectively supported by the side plate support 13 at two sides. The side plate support 13 is formed with at least one U-shaped groove, and two side edges 121 of the base plate 12 that are opposite to each other may be inserted into the U-shaped groove.

During manufacturing of the housing 10 of the refrigerator, the side edges 121 of the base plate 12 may be first inserted into the U-shaped groove of the side plate support 13 to implement relative positioning between the base plate 12 and the side plate support 13. Then, after the base plate 12, the side plate support 13, the liner 11, and the like are arranged in position relative to each other, foaming filling may be performed. However, in a case that the relative positioning between the base plate 12 and the side plate support 13 are only implemented by the side edges 121 of the base plate 12 and the U-shaped groove of the side plate support 13, the base plate 12 is easy to shift relative to the side plate support 13 or even slides out of the side plate support 13 during assembly, which may lead to problems such as a leakage of the heat insulation material. To prevent the base plate 12 from shifting relative to the side plate support 13 during assembly, an additional auxiliary tool is required to fix the base plate 12 and the side plate support 13 in advance.

The following describes the housing 10 in the present invention more clearly with reference to FIG. 3 and FIG. 4. FIG. 3 schematically shows a sectional view of a component formed by a side plate support 13 and a base plate 12 of a heat-insulated housing 10 according to an exemplary embodiment of the present invention. FIG. 4 schematically shows an enlarged view of a part circled in FIG. 3.

As shown in FIG. 3, the heat-insulated housing 10 includes the base plate 12 and two side plate supports 13, and the two side plate supports 13 respectively support the base plate 12 at two sides. Therefore, at least one insertion groove 131 is formed on each side plate support 13. The base plate 12 has two side edges 121 opposite to each other, and a side edge section 122 of the base plate 12 adjacent to the side edges 121 is inserted into the insertion groove 131 of the side plate support 13. For clarity, only some reference numerals are marked in the accompanying drawings.

As can be seen more clearly from FIG. 4, the insertion groove 131 has two groove side walls 1311 opposite to each other, and the side edge section 122 of the base plate 12 is inserted between the two groove side walls 1311. The insertion groove 131 may be particularly constructed into a U-shaped groove formed by the two groove side walls 1311 and a groove bottom connecting the two groove side walls 1311, and the groove bottom is adapted to restrict the movement of the side edge section 122 relative to the insertion groove 131 in the insertion direction.

A stop structure 1312 is formed on at least one of the two groove side walls 1311. A clamping structure 123 is formed on the side edge section 122 of the base plate 12. The stop structure 1312 is adapted to contact the clamping structure 123 and restrict movement of the side edge section 122 relative to the insertion groove 131 in a direction opposite to an insertion direction of the side edge section 122 into the insertion groove 131.

By the clamping structure 123 and the stop structure 1312, after being inserted into the insertion groove 131 of the side plate support 13, the side edge section 122 of the base plate 12 is restricted in the insertion groove 131 and cannot be disengaged from the insertion groove 131. Therefore, the base plate 12 and the side plate support 13 can be prevented from detaching from each other, and no additional component or tool is required, which simplifies the manufacturing of the housing and is particularly conducive to implement automated manufacturing.

The stop structure 1312 may be particularly adapted to shift in a groove width direction (shown by a bi-directional arrow in FIG. 4) of the insertion groove 131 by means of the stop structure 1312 and/or elastic deformation of the groove side wall 1311. Alternatively or additionally, the clamping structure 123 may be adapted to shift in a groove width direction of the insertion groove 131 by means of the clamping structure 123 and/or elastic deformation of the side edge section 122. This is conducive to implement locking between the clamping structure 123 and the stop structure 1312 without an additional component or tool, thereby simplifying the assembly. In addition, this is further conducive to detach the base plate 12 from the side plate support 13 without damage, and no additional component or tool is required.

Particularly, locking or unlocking between the clamping structure 123 and the stop structure 1312 can be correspondingly implemented only by means of an insertion action of the side edge section 122 into the insertion groove 131 or a pull-out action, without an additional assembling action of an operator.

In the embodiment shown in FIG. 4, the stop structure 1312 includes a hook 1312a protruding from the groove side wall 1311 and extending towards a direction of the side edge section 122. Correspondingly, the clamping structure 123 includes a fin 123a extending from the base plate 12 towards a direction of the groove side wall 1311 formed with the hook 1312a. The hook 1312a is located at an outer side of the fin 123a and restricts movement of the fin 123a in a direction opposite to the insertion direction. Such a combination of the hook 1312a with the fin 123a can implement: The locking between the clamping structure 123 and the stop structure 1312 can be implemented only by means of the insertion action of the side edge section 122 into the insertion groove 131, without the additional assembly action of the operator. During the insertion of the side edge section 122 of the base plate 12 into the insertion groove 131 in the insertion direction (shown by a unidirectional arrow in FIG. 4), the fin 123a may abut against the hook 1312a, and the fin 123a and/or the groove side wall 1311 formed with the hook 1312a can elastically deform and shift in the groove width direction of the insertion groove 131. After the fin 123a completely passes through the hook 1312a, the fin 123a and/or the groove side wall 1311 formed with the hook 1312a can at least partially release the elastic deformation, and interlocking is formed between the fin 123a and the hook 1312a. The assembly is easy and fast. In addition, the fin 123a is further conducive to block the heat insulation foam during foaming filling, to prevent a leakage of the heat insulation foam.

As shown in FIG. 4, the fin 123a extends obliquely in the direction opposite to the insertion direction towards the groove side wall 1311 formed with the hook 1312a. Therefore, it is ensured that the fin 123a can provide a significant resistance for preventing the side edge section 122 from detaching from the insertion groove 131, and can make the side edge section 122 be subjected to a smaller resistance when inserted into the insertion groove 131.

Optionally, the hook 1312a has an inclined outer surface 1313 at one side towards an opening of the insertion groove 131, and the inclined outer surface 1313 inclines away from the groove side wall 1311 on which the hook 1312a is located in the insertion direction of the side edge section 122. The insertion operation of the side edge section 122 can be more convenient.

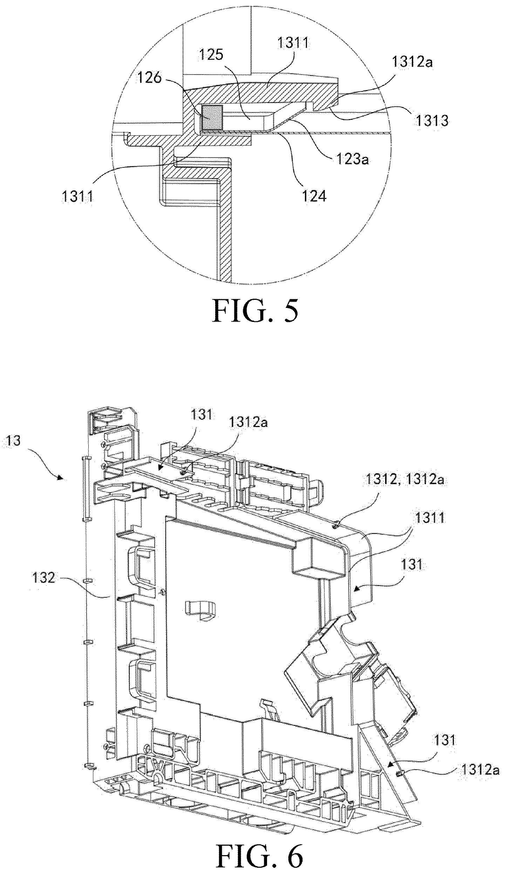

FIG. 5 schematically shows a view similar to FIG. 4 according to another exemplary embodiment of the present invention. Different from FIG. 4, in the embodiment shown in FIG. 5, the side edge section 122 includes an edge body 124 extending from a middle part of the base plate 12 to the side edge 121 and a laminate 125 extending from the side edge 121 to the middle part of the base plate 12 in parallel to the edge body 124, and the fin 123a is connected to one end of the laminate 125 opposite to the side edge 121. The middle part of the base plate 12 represents a part of the base plate 12 that is located between the two side edge sections 122. By adjusting a width of the laminate 125, the fin 123a can incline at an expected angle.

As shown in FIG. 5, the laminate 125 is conducive to arrange a seal element 126. The seal element 126 may be arranged on the side edge section 122 and extend along the side edge 121, and the seal element 126 is at least partially located between the laminate 125 and the groove side wall 1311 formed with the hook 1312a. During the foaming filling of the housing, the seal element 126 may be configured to prevent a leakage of the heat insulation material from a gap between the base plate 12 and the side plate support 13 towards a direction of a mechanical compartment. The seal element 126, for example, may be formed as a seal sponge.

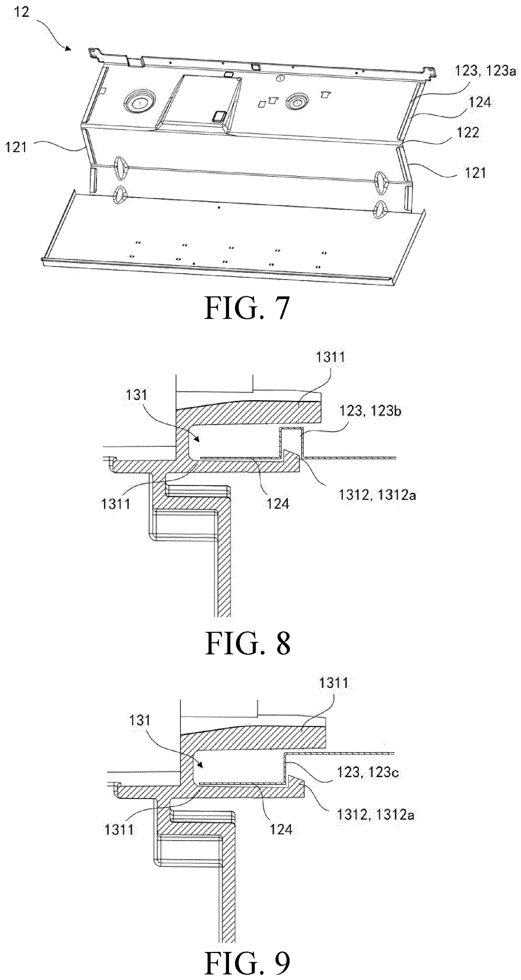

FIG. 6 and FIG. 7 schematically show a side plate support 13 and a base plate 12 according to the embodiment shown in FIG. 5. As shown in FIG. 6, the side plate support 13 includes a support body 132, and a plurality of groove side walls 1311 are formed on the support body 132 protruding from the support body 132. The plurality of groove side walls 1311 may particularly extend in different directions, which is conducive to restrict the position of the base plate 12 relative to the side plate support 13. The hook 1312a is located at a free end of the groove side wall 1311 away from the support body 132, to implement shifting of the hook 1312a in the groove width direction by means of the elastic deformation of the groove side wall 1311. A plurality of stop structures 1312 may be formed on the insertion groove 131, and the plurality of stop structures 1312 are spaced apart from each other in an extension direction of the insertion groove 131.

The side plate support 13 may be particularly formed as a plastic piece. For example, the side plate support 13 may be an injection molding piece. This makes the side plate support 13 easy to manufacture and makes it easy to form the stop structure 1312, such as the hook 1312a, for the base plate 12. In addition, shifting of the stop structure 1312 in the groove width direction can be implemented by means of elasticity of the plastic piece.

FIG. 7 exemplarily shows a base plate 12 formed as a metal piece. A side edge section 122 of the base plate 12 includes a laminate 125 and a fin 123a. The base plate 12 may be manufactured, for example, by a sheet metal process.

Such a base plate 12 is easy to manufacture and has sufficient strength.

FIG. 8 schematically shows a partial view of a part of a housing 10 including a clamping structure 123 and a stop structure 1312 according to an exemplary embodiment of the present invention. In the embodiment shown in FIG. 8, the stop structure 1312 includes a hook 1312a protruding from a groove side wall 1311 and extending towards a direction of a side edge section 122, and the clamping structure 123 includes a concave portion 123b formed in the side edge section 122. The hook 1312a may extend into the concave portion 123b and restrict movement of the concave portion 123b in a direction opposite to an insertion direction. The concave portion 123b may be formed in a base plate 12, for example, by a stamping process.

FIG. 9 schematically shows a partial view of a part of a housing 10 including a clamping structure 123 and a stop structure 1312 according to an exemplary embodiment of the present invention. In the embodiment shown in FIG. 9, the stop structure 1312 includes a hook 1312a protruding from a groove side wall 1311 and extending towards a direction of a side edge section 122, the clamping structure 123 includes a step 123c formed in the side edge section 122, and the step 123c has a side surface of the step 123c facing a direction of an opening of an insertion groove 131. The hook 1312a may be adapted to contact the side surface of the step 123c and restrict movement of concave portion 123b in a direction opposite to an insertion direction.

In an additional embodiment according to the present invention, the stop structure 1312 and the clamping structure 123 may be formed into other forms. For example, the stop structure 1312 may include a groove, and the clamping structure 123 may include a protrusion that can be inserted into the groove. Alternatively, the stop structure 1312 and the clamping structure 123 may be formed into steps that can fit each other.

## Claims

1. A heat-insulated housing (10) of a household refrigeration appliance, the housing (10) comprises:
a liner (11), bounding a storage compartment for storing an article;
a base plate (12), located below the liner (11), wherein a space filled with a heat insulation material is formed between the base plate (12) and the liner (11), and the base plate (12) has two side edges (121) opposite to each other; and
at least one side plate support (13), supporting the base plate (12), wherein the side plate support (13) is formed with at least one insertion groove (131), the insertion groove (131) has two groove side walls (1311) opposite to each other, and a side edge section (122) of the base plate (12) adjacent to the side edges (121) is inserted between the two groove side walls (1311),
wherein a stop structure (1312) is formed on at least one of the two groove side walls (1311), a clamping structure (123) is formed on the side edge section (122) of the base plate (12), and the stop structure (1312) is adapted to contact the clamping structure (123) and restrict movement of the side edge section (122) relative to the insertion groove (131) in a direction opposite to an insertion direction of the side edge section (122) into the insertion groove (131), wherein the stop structure (1312) comprises a hook (1312a) protruding from the groove side wall (1311) and extending towards a direction of the side edge section (122), **characterized in that**, the clamping structure (123) comprises a fin (123a) extending from the base plate (12) towards a direction of the groove side wall (1311) formed with the hook (1312a), and the hook (1312a) is located at an outer side of the fin (123a) and restricts movement of the fin (123a) in the direction opposite to the insertion direction and **in that** the fin (123a) extends obliquely in the direction opposite to the insertion direction towards the groove side wall (1311) formed with the hook (1312a) and **in that** the side edge section (122) comprises an edge body (124) extending from a middle part of the base plate (12) to the side edge (121) and a laminate (125) extending from the side edge (121) to the middle part of the base plate (12) in parallel to the edge body (124), and the fin (123a) is connected to one end of the laminate (125) opposite to the side edge (121).

2. The housing (10) according to claim 1, **characterized in that**
the stop structure (1312) is adapted to be displaced in a groove width direction of the insertion groove (131) by means of the stop structure (1312) and/or elastic deformation of the groove side wall (1311); and/or
the clamping structure (123) is adapted to be displaced in a groove width direction of the insertion groove (131) by means of the clamping structure (123) and/or elastic deformation of the side edge section (122).

3. The housing (10) according to claim 1 or 2, **characterized in that**
the hook (1312a) has an inclined outer surface (1313) at one side towards an opening of the insertion groove (131), and the inclined outer surface (1313) inclines away from the groove side wall (1311) on which the hook (1312a) is located in the insertion direction of the side edge section (122).

4. The housing (10) according to one of the preceding claims, **characterized in that**
the side plate support (13) comprises a support body (132), the groove side wall (1311) is formed on the support body (132) protruding from the support body (132), and the hook (1312a) is located at a free end of the groove side wall (1311) away from the support body (132).

5. The housing (10) according to any one of the preceding claims, **characterized in that** a seal element (126) extending along the side edge (121) is arranged on the side edge section (122), and the seal element (126) is at least partially located between the laminate (125) and the groove side wall (1311) formed with the hook (1312a).

6. The housing (10) according to one of the any preceding claims , **characterized in that**
the clamping structure (123) comprises a concave portion (123b) formed in the side edge section (122), and the hook (1312a) extends into the concave portion (123b) and restricts movement of the concave portion (123b) in the direction opposite to the insertion direction; or
the clamping structure (123) comprises a step (123c) formed in the side edge section (122), the step (123c) has a side surface of the step facing a direction of the opening of the insertion groove (131), and the hook (1312a) is adapted to contact the side surface of the step and restrict movement of a concave portion (123b) in the direction opposite to the insertion direction.

7. The housing (10) according to any one of the preceding claims, **characterized in that**
the side plate support (13) is a plastic piece; and/or
the base plate (12) is a metal piece.

8. The housing (10) according to any one of the preceding claims, **characterized in that**
the insertion groove (131) is constructed into a U-shaped groove formed by the two groove side walls (1311) and a groove bottom connecting the two groove side walls (1311), and the groove bottom is adapted to restrict the movement of the side edge section (122) relative to the insertion groove (131) in the insertion direction.

9. The housing (10) according to any one of the preceding claims, **characterized in that**
a plurality of insertion grooves (131) are formed on the side plate support (13); and/or
a plurality of stop structures (1312) are formed on the insertion groove (131), and the stop structures (1312) are spaced apart in an extension direction of the insertion groove (131).

10. The housing (10) according to any one of the preceding claims, **characterized in that**
the base plate (12) and the side plate support (13) are fixed to each other by means of the heat insulation material in the housing (10), and the base plate (12) and the side plate support (13) at least partially bound a mechanical compartment of the household refrigeration appliance.

11. A household refrigeration appliance, **characterized in that**
the household refrigeration appliance comprises the housing (10) according to any one of claims 1 to 10.

## Patentansprüche

1. Wärmegedämmtes Gehäuse (10) für ein Haushaltskühlgerät, wobei das Gehäuse (10) Folgendes umfasst:
einen Behälter (11), der einen Aufbewahrungsraum zum Aufbewahren eines Gegenstands begrenzt,
eine Grundplatte (12), die sich unter dem Behälter (11) befindet, wobei zwischen der Grundplatte (12) und dem Behälter (11) ein mit Wärmedämmmaterial gefüllter Zwischenraum ausgebildet ist und die Grundplatte (12) zwei sich gegenüberliegende Seitenränder (121) aufweist, und
mindestens eine Seitenplattenhalterung (13), die die Grundplatte (12) hält, wobei die Seitenplattenhalterung (13) mit mindestens einer Einführnut (131) versehen ist, die zwei sich gegenüberliegende Nutseitenwände (1311) aufweist, und ein an die Seitenränder (121) angrenzender Seitenrandteilabschnitt (122) der Grundplatte (12) zwischen die beiden Nutseitenwände (1311) eingeführt ist,
wobei an mindestens einer der beiden Nutseitenwände (1311) eine Anschlagkonstruktion (1312) ausgebildet ist, an dem Seitenrandteilabschnitt (122) der Grundplatte (12) eine Klemmkonstruktion (123) ausgebildet ist und die Anschlagkonstruktion (1312) so ausgelegt ist, dass sie die Klemmkonstruktion (123) berührt und eine Bewegung des Seitenrandteilabschnitts (122) in Bezug auf die Einführnut (131) in einer einer Einführrichtung des Seitenrandteilabschnitts (122) in die Einführnut (131) entgegengesetzten Richtung einschränkt, wobei die Anschlagkonstruktion (1312) einen Haken (1312a) umfasst, der von der Nutseitenwand (1311) vorsteht und sich in Richtung des Seitenrandteilabschnitts (122) erstreckt,
**dadurch gekennzeichnet, dass** die Klemmkonstruktion (123) eine Rippe (123a) umfasst, die sich von der Grundplatte (12) in Richtung der mit dem Haken (1312a) versehenen Nutseitenwand (1311) erstreckt, und sich der Haken (1312a) an einer Außenseite der Rippe (123a) befindet und eine Bewegung der Rippe (123a) in der der Einführrichtung entgegengesetzten Richtung einschränkt und dass sich die Rippe (123a) in der der Einführrichtung entgegengesetzten Richtung schräg zu der mit dem Haken (1312a) versehenen Nutseitenwand (1311) erstreckt und dass der Seitenrandteilabschnitt (122) einen Randhauptteil (124) umfasst, der sich von einem Mittelteil der Grundplatte (12) zum Seitenrand (121) erstreckt, und ein Verbundmaterial (125), das sich parallel zum Randhauptteil (124) vom Seitenrand (121) zum Mittelteil der Grundplatte (12) erstreckt, und die Rippe (123a) mit einem dem Seitenrand (121) gegenüberliegenden Ende des Verbundmaterials (125) verbunden ist.

2. Gehäuse (10) nach Anspruch 1, **dadurch gekennzeichnet, dass**
die Anschlagkonstruktion (1312) so ausgelegt ist, dass sie mithilfe der Anschlagkonstruktion (1312) und/oder einer elastischen Verformung der Nutseitenwand (1311) in einer Nutbreitenrichtung der Einführnut (131) verschoben wird, und/oder
die Klemmkonstruktion (123) so ausgelegt ist, dass sie mithilfe der Klemmkonstruktion (123) und/oder einer elastischen Verformung des Seitenrandteilabschnitts (122) in einer Nutbreitenrichtung der Einführnut (131) verschoben wird.

3. Gehäuse (10) nach Anspruch 1 oder 2, **dadurch gekennzeichnet, dass**
der Haken (1312a) auf einer Seite zu einer Öffnung der Einführnut (131) hin eine geneigte Außenfläche (1313) aufweist und die geneigte Außenfläche (1313) von der Nutseitenwand (1311), an der sich der Haken (1312a) befindet, in Einführrichtung des Seitenrandteilabschnitts (122) weg geneigt ist.

4. Gehäuse (10) nach einem der vorhergehenden Ansprüche, **dadurch gekennzeichnet,**
**dass**
die Seitenplattenhalterung (13) einen Halterungshauptteil (132) umfasst, die Nutseitenwand (1311) an dem Halterungshauptteil (132) ausgebildet ist und davon vorsteht und sich der Haken (1312a) an einem von dem Halterungshauptteil (132) weg weisenden freien Ende der Nutseitenwand (1311) befindet.

5. Gehäuse (10) nach einem der vorhergehenden Ansprüche, **dadurch gekennzeichnet,**
**dass**
ein sich an dem Seitenrand (121) entlang erstreckendes Dichtungselement (126) an dem Seitenrandteilabschnitt (122) angeordnet ist und sich das Dichtungselement (126) zumindest teilweise zwischen dem Verbundmaterial (125) und der mit dem Haken (1312a) versehenen Nutseitenwand (1311) befindet.

6. Gehäuse (10) nach einem der vorhergehenden Ansprüche, **dadurch gekennzeichnet,**
**dass**
die Klemmkonstruktion (123) einen konkaven Abschnitt (123b) umfasst, der in dem Seitenrandteilabschnitt (122) ausgebildet ist, und sich der Haken (1312a) in den konkaven Abschnitt (123b) erstreckt und eine Bewegung des konkaven Abschnitts (123b) in der Einführrichtung entgegengesetzter Richtung einschränkt, oder
die Klemmkonstruktion (123) eine in dem Seitenrandteilabschnitt (122) ausgebildete Stufe (123c) umfasst, die Stufe (123c) eine Seitenfläche aufweist, die in Richtung der Öffnung der Einführnut (131) weist und der Haken (1312a) so ausgelegt ist, dass er die Seitenfläche der Stufe berührt und eine Bewegung eines konkaven Abschnitts (123b) in der Einführrichtung entgegengesetzter Richtung einschränkt.

7. Gehäuse (10) nach einem der vorhergehenden Ansprüche, **dadurch gekennzeichnet,**
**dass**
es sich bei der Seitenplattenhalterung (13) um ein Kunststoffteil handelt und/oder es sich bei der Grundplatte (12) um ein Metallteil handelt.

8. Gehäuse (10) nach einem der vorhergehenden Ansprüche, **dadurch gekennzeichnet,**
**dass**
die Einführnut (131) als U-förmige Nut ausgebildet ist, die von den beiden Nutseitenwänden (1311) und einem Nutgrund gebildet wird, der die beiden Nutseitenwände (1311) verbindet, und der Nutgrund so ausgelegt ist, dass er die Bewegung des Seitenrandteilabschnitts (122) in Bezug auf die Einführnut (131) in Einführrichtung einschränkt.

9. Gehäuse (10) nach einem der vorhergehenden Ansprüche, **dadurch gekennzeichnet,**
**dass**
mehrere Einführnuten (131) an der Seitenplattenhalterung (13) ausgebildet sind und/oder
mehrere Anschlagkonstruktionen (1312) an der Einführnut (131) ausgebildet und in Verlaufsrichtung der Einführnut (131) beabstandet sind.

10. Gehäuse (10) nach einem der vorhergehenden Ansprüche, **dadurch gekennzeichnet,**
**dass**
die Grundplatte (12) und die Seitenplattenhalterung (13) mithilfe des Wärmedämmmaterials im Gehäuse (10) aneinander befestigt sind und die Grundplatte (12) und die Seitenplattenhalterung (13) zumindest teilweise einen Technikraum des Haushaltskühlgeräts begrenzen.

11. Haushaltskühlgerät, **dadurch gekennzeichnet, dass**
das Haushaltskühlgerät das Gehäuse (10) nach einem der Ansprüche 1 bis 10 umfasst.

## Revendications

1. Boîtier thermiquement isolé (10) d'un appareil de réfrigération domestique, le boîtier (10) comprend :
une doublure (11), délimitant un compartiment de stockage pour stocker un article ;
une plaque de base (12), située sous la doublure (11), dans lequel un espace rempli d'un matériau d'isolation thermique est formé entre la plaque de base (12) et la doublure (11), et la plaque de base (12) présente deux bords latéraux (121) opposés l'un à l'autre ; et
au moins un support de plaque latérale (13), supportant la plaque de base (12), dans lequel le support de plaque latérale (13) est formé avec au moins une rainure d'insertion (131), la rainure d'insertion (131) présente deux parois latérales de rainure (1311) opposées l'une à l'autre, et une section de bord latéral (122) de la plaque de base (12) adjacente aux bords latéraux (121) est insérée entre les deux parois latérales de rainure (1311),
dans lequel une structure d'arrêt (1312) est formée sur au moins l'une des deux parois latérales de rainure (1311), une structure de serrage (123) est formée sur la section de bord latéral (122) de la plaque de base (12), et la structure d'arrêt (1312) est adaptée pour entrer en contact avec la structure de serrage (123) et restreindre le mouvement de la section de bord latéral (122) par rapport à la rainure d'insertion (131) dans une direction opposée à une direction d'insertion de la section de bord latéral (122) dans la rainure d'insertion (131), dans lequel la structure d'arrêt (1312) comprend un crochet (1312a) faisant saillie à partir de la paroi latérale de rainure (1311) et s'étendant vers une direction de la section de bord latéral (122), **caractérisé en ce que** la structure de serrage (123) comprend une ailette (123a) s'étendant à partir de la plaque de base (12) vers une direction de la paroi latérale de rainure (1311) formée avec le crochet (1312a), et le crochet (1312a) est situé sur un côté externe de l'ailette (123a) et restreint le mouvement de l'ailette (123a) dans la direction opposée à la direction d'insertion, et **en ce que** l'ailette (123a) s'étend obliquement dans la direction opposée à la direction d'insertion vers la paroi latérale de rainure (1311) formée avec le crochet (1312a), et **en ce que** la section de bord latéral (122) comprend un corps de bord (124) s'étendant à partir d'une partie médiane de la plaque de base (12) jusqu'au bord latéral (121) et un stratifié (125) s'étendant à partir du bord latéral (121) jusqu'à la partie médiane de la plaque de base (12) parallèlement au corps de bord (124), et l'ailette (123a) est reliée à une extrémité du stratifié (125) opposée au bord latéral (121).

2. Boîtier (10) selon la revendication 1, **caractérisé en ce que**
la structure d'arrêt (1312) est adaptée pour être déplacée dans une direction de largeur de rainure de la rainure d'insertion (131) au moyen de la structure d'arrêt (1312) et/ou d'une déformation élastique de la paroi latérale de rainure (1311) ; et/ou
la structure de serrage (123) est adaptée pour être déplacée dans une direction de largeur de rainure de la rainure d'insertion (131) au moyen de la structure de serrage (123) et/ou d'une déformation élastique de la section de bord latéral (122).

3. Boîtier (10) selon la revendication 1 ou 2, **caractérisé en ce que**
le crochet (1312a) présente une surface externe inclinée (1313) sur un côté vers une ouverture de la rainure d'insertion (131), et la surface externe inclinée (1313) est inclinée en s'éloignant de la paroi latérale de rainure (1311) sur laquelle le crochet (1312a) est situé dans la direction d'insertion de la section de bord latéral (122).

4. Boîtier (10) selon l'une des revendications précédentes, **caractérisé en ce que**
le support de plaque latérale (13) comprend un corps de support (132), la paroi latérale de rainure (1311) est formée sur le corps de support (132) faisant saillie à partir du corps de support (132), et le crochet (1312a) est situé au niveau d'une extrémité libre de la paroi latérale de rainure (1311) à l'écart du corps de support (132).

5. Boîtier (10) selon l'une quelconque des revendications précédentes,
**caractérisé en ce que**
un élément d'étanchéité (126) s'étendant le long du bord latéral (121) est disposé sur la section de bord latéral (122), et l'élément d'étanchéité (126) est au moins partiellement situé entre le stratifié (125) et la paroi latérale de rainure (1311) formée avec le crochet (1312a).

6. Boîtier (10) selon l'une quelconque des revendications précédentes,
**caractérisé en ce que**
la structure de serrage (123) comprend une partie concave (123b) formée dans la section de bord latéral (122), et le crochet (1312a) s'étend dans la partie concave (123b) et restreint le mouvement de la partie concave (123b) dans la direction opposée à la direction d'insertion ; ou
la structure de serrage (123) comprend un palier (123c) formé dans la section de bord latéral (122), le palier (123c) présente une surface latérale du palier faisant face à une direction de l'ouverture de la rainure d'insertion (131), et le crochet (1312a) est adapté pour entrer en contact avec la surface latérale du palier et restreindre le mouvement d'une partie concave (123b) dans la direction opposée à la direction d'insertion.

7. Boîtier (10) selon l'une quelconque des revendications précédentes,
**caractérisé en ce que**
le support de plaque latérale (13) est une pièce en plastique ; et/ou
la plaque de base (12) est une pièce en métal.

8. Boîtier (10) selon l'une quelconque des revendications précédentes,
**caractérisé en ce que**
la rainure d'insertion (131) est construite comme une rainure en forme de U formée par les deux parois latérales de rainure (1311) et un fond de rainure reliant les deux parois latérales de rainure (1311), et le fond de rainure est adapté pour restreindre le mouvement de la section de bord latéral (122) par rapport à la rainure d'insertion (131) dans la direction d'insertion.

9. Boîtier (10) selon l'une quelconque des revendications précédentes,
**caractérisé en ce que**
une pluralité de rainures d'insertion (131) est formée sur le support de plaque latérale (13) ; et/ou
une pluralité de structures d'arrêt (1312) est formée sur la rainure d'insertion (131), et les structures d'arrêt (1312) sont espacées les unes des autres dans une direction d'extension de la rainure d'insertion (131).

10. Boîtier (10) selon l'une quelconque des revendications précédentes,
**caractérisé en ce que**
la plaque de base (12) et le support de plaque latérale (13) sont fixés l'un à l'autre au moyen du matériau d'isolation thermique dans le boîtier (10), et la plaque de base (12) et le support de plaque latérale (13) délimitent au moins partiellement un compartiment mécanique de l'appareil de réfrigération domestique.

11. Appareil de réfrigération domestique, **caractérisé en ce que**
l'appareil de réfrigération domestique comprend le boîtier (10) selon l'une quelconque des revendications 1 à 10.
